# EUROPEAN PATENT SPECIFICATION

(11) **EP 2 416 039 B1**
(45) Date of publication and mention of the grant of the patent: **17.04.2013**
(21) Application number: 11175982.5
(22) Date of filing: 29.07.2011
(51) Int. Cl.: F16K 7/12, F16K 31/122

(54) **Diaphragm valve**
Membraneventil
Vanne à diaphragme

(30) Priority: 04.08.2010 IT VR20100160
(43) Date of publication of application: 08.02.2012
(73) Proprietor: Uster di Pellin Mario & C. S.n.c., 31050 Monastier di Treviso (IT)
(72) Inventor: Pellin, Daniele, 31050 MONASTIER DI TREVISO (TV) (IT); Pellin, Mario, 31050 MONASTIER DI TREVISO (PC) (IT)
(74) Representative: Fisauli, Beatrice A. M.

(56) References cited:
- WO-A1-2006/075450
- US-A- 4 180 239
- US-A- 4 955 582
- US-A- 5 002 086
- US-A1- 2002 003 222
- US-A1- 2004 099 311
- US-A1- 2005 006 609

## Description

The present invention refers, in general, to a diaphragm valve. More particularly, it is a pneumatic diaphragm valve, preferably used for the micro-dosage of fluids.

Diaphragm valves are known to be used to prevent or allow the passage of a fluid as well as to adjust the dosage, for example, in equipment for handling chemicals.

As these valves are used for dosing very small quantities of fluids, extreme precision is required regarding the opening and closing times of the passage. In this regard, a known problem with micro-dosing valves is the possible fluid residue in the passing chamber, with possible contamination or degradation of the fluid itself. Patent document n. US 4 180 239 A discloses a valve according to the abovementioned type.

A further known issue with micro-dosing valves is related to wear on the components: these valves are, in fact, usually subjected to rather fast working cycles, for example with hundreds of cycles per minute, with constant stress on the various parts.

For example, the male-female coupling through threading between the cylinder stem of the valve and the diaphragm that allows the fluid to pass through may be so worn that the threading itself is stripped.

Similarly, the other components of the valve, such as the stem itself or the piston, are subject to wear, mainly due to friction with the surfaces along which they move.

The purpose of the invention is to eliminate the problems present in diaphragm valves made according to known techniques.

In particular, one purpose of the invention is to minimize the residual fluid that remains inside the passing chamber, opened and closed by the diaphragm, so as to limit contact and possible contamination of the fluid to be dosed.

Another purpose of the invention is to obtain a diaphragm valve which, although subject to high opening and closing frequencies, is resistant to stress.

A further purpose of the invention is to minimize wear to the components of which it is composed.

These and other purposes are achieved, according to the invention, by a diaphragm valve for dosing a fluid, comprising:
a valve body in which a rear chamber and a front hole, connected to each other, are obtained;
a regulator body inserted in the rear chamber of the valve body so that said regulator body tops said rear chamber at the back;
a piston moving inside the rear chamber and being pushed by elastic means interposed between the regulator body and said piston;
a stem having an end fixed to the piston and going through the front hole;
a diaphragm, at least partially fixed to the valve body and comprising a moving body fixed to the free end of the stem, so that said moving body can be moved thanks to the stem movement;
a head fixed to the valve body and in which a passing duct is obtained, said passing duct suitable for being crossed by the fluid to be dosed.

The passing duct comprises an opening in which the moving body can be moved, so that said moving body can be placed in a first closing position wherein the moving body closes the passing duct, and in a second opening position wherein the moving body opens the passing duct.

The moving body comprises a truncated cone-shaped end and that the opening has a truncated cone shape which corresponds to the shape of the truncated cone-shaped end, so that, when the moving body is in the first closing position, the opening is at least partially occupied by the truncated cone-shaped end.

Thanks to this configuration, in particular to the shape of the opening and the truncated cone-shaped end that acts as a shutter, the chamber created by the opening, when the valve is closed, has a limited volume, thus reducing the amount of fluid enclosed in the chamber itself. In this way, the deposit of material is limited, and can also be eliminated if the shape and size of the opening and those of the truncated cone-shaped end are the same.

The diaphragm comprises an external annular body fixed to the valve body and to the head, and connected through a flexible plate to the moving body; a threaded blind hole is obtained in said moving body, and wherein the free end of the stem may be threaded with a thread corresponding to the thread of the blind hole itself. Thanks to this configuration, the free end of the stem can be screwed into the blind hole, so that a movement of the stem corresponds to a movement of the moving body, resulting in opening or closing the valve.

The diaphragm valve is characterized by the fact of including a ring, placed around the moving body and suitable for strengthening the threaded coupling of the stem with the moving body of the diaphragm. In this way, the life cycles of the diaphragm are increased, and its coupling with the stem, based on known techniques, is critical as it is made from a material, typically polytetrafluoroethylene (PTFE), different to that of the stem itself.

This ring may be made from brass.

In order to reduce friction between surfaces that slide together, an attempt is made to minimize surface roughness. To this end, the stem may be made of steel and then lapped to be coated with titanium nitride.

To the same end, the piston may be made of aluminium and/or steel.

As an advantage, the regulator body may be screwed in the rear chamber of the valve body, so that said regulator body can vary its position in relation to the rear chamber, in order to adjust the length of the stroke of the piston and the distance between the truncated cone-shaped end and the opening. This ensures regulation of fluid dosage.

The valve head, referred to in this invention, may be cylindrical in shape with a side which is adjoining to the diaphragm, and wherein the passing duct obtained in the head may comprise a radially-extending first exit duct connected with one end to the outside and with the opposite end, through an oblique duct, to the opening chamber, and a second exit duct connected with one end to the outside and with the opposite end, through an axial duct, to the opening chamber. In particular said opening chamber may be obtained in the side adjacent to the diaphragm and may form a passing chamber together with this.

The diaphragm valve, according to the invention, may have a clamping ring placed in the rear chamber, said clamping ring being adapted to stop the stroke of the piston in case the regulator body is unthreaded from the rear chamber.

For exemplary and non-exhaustive purposes, the invention's additional specifications and features are provided in greater detail within the description below, as well as within the attached diagrams, which include:
- figure 1: a lateral cross-section view of a diaphragm valve, according to the invention, in the closed position;
- figure 2: a lateral cross-section view of the diaphragm valve in figure 1 in the open position;
- figure 3: a lateral exploded view of the diaphragm valve in figure 1;
- figures 4 and 5: cross-section views of two different levels of a component, namely a valve body, for the valve in figure 1;
- figures 6 and 7: respectively, a lateral view and a lateral cross-section view of a component, namely a regulator, for the valve in figure 1;
- figure 8: a view of the piston and stem for the valve in figure 1;
- figures 9 and 10: cross-section views of two different levels of a component, namely a head, for the valve in figure 1;
- figure 11: shows a front view of the head in figure 9;
- figures 12 and 13: show, respectively, a lateral cross-section view and a front view of a component, namely a diaphragm, for the valve in figure 1;
- figure 14: is a view of a detail of the diaphragm in figure 12;
- figures 15 and 16: respectively, a front view and a lateral view of a component, namely an anti-torsion washer, for the valve in figure 1;
- figures 17 and 18: respectively, a lateral cross-section view and a front view of a component, namely a reinforcement ring, for the valve in figure 1 ;

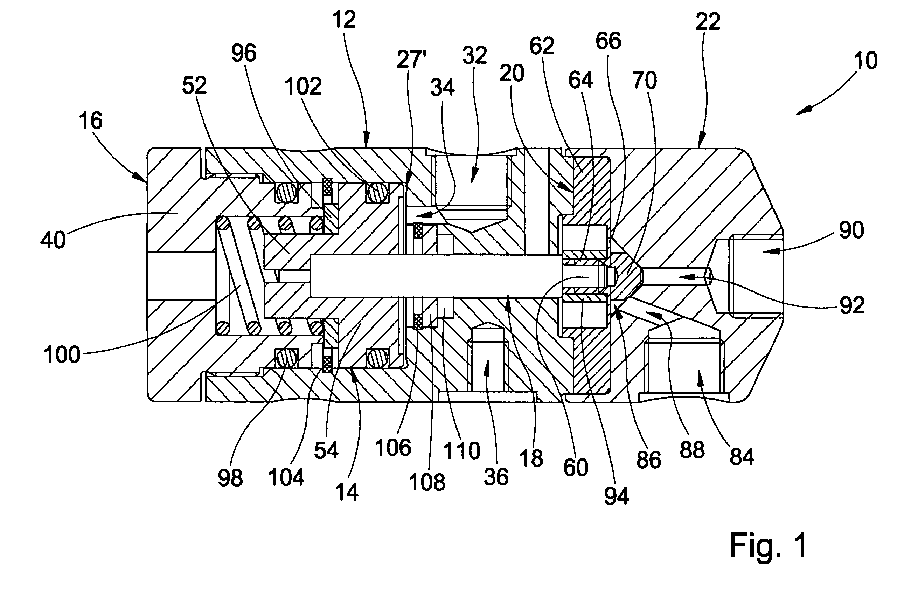

With reference to the attached figures, in particular to figures 1, 2 and 3, 10 indicates a diaphragm valve, including a valve body (12) which is hollow inside and in which a piston (14) can slide and which is closed at the rear by a regulator (16), in order to block the piston (14) stroke on one side.

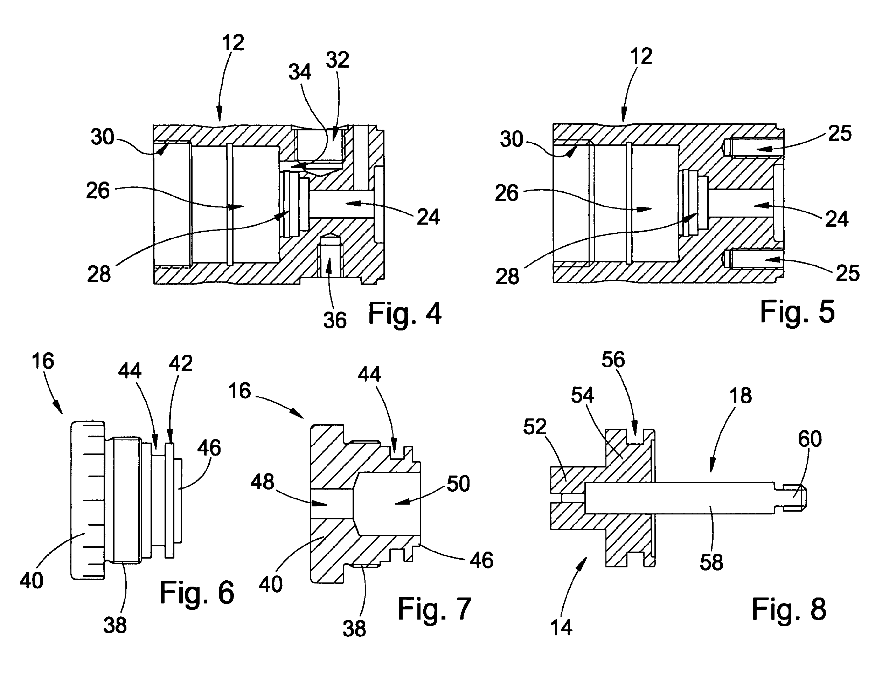

A stem (18) is fixed to the piston (14) and passes through a front hole (24), indicated in figures 4 and 5, obtained at the front of the valve body (12). The same stem (18) is coupled to the central portion of a diaphragm (20), fixed at the perimeter to the valve body (12). A head (22) is fixed to the valve body (12) and to the diaphragm (20).

By analyzing the different components of the diaphragm valve (10) separately, the valve body (12), visible in figures 4 and 5, appears to have a substantially cylindrical body in which a rear chamber (26) is obtained, connected to the front hole (24) through an intermediate hole (28). The rear chamber (26) and the intermediate hole (28) have various portions of different diameters, each capable of accommodating a respective element of the valve (10).

In the valve body (12), there is a radial opening (32) threaded on the perimeter and connected through a duct (34) to the rear chamber (26). On the opposite side to the opening (32) is a suitably threaded blind hole (36), designed to allow the valve body (12) and the whole valve (10) to be fixed to another element.

As can be seen in figure 5, two threaded holes (25) are obtained in the front part of the valve body (12). At the opposite end of the valve body (12), inside the rear chamber (26) is a thread (30), designed to couple with a threaded portion (38) of the regulator (16).

The regulator (16), illustrated individually in figures 6 and 7, is a substantially cylindrical body with a rear cylindrical portion (40) with a larger diameter, forming a single body with the threaded portion (38) and an end cylindrical portion (42) in which a groove (44) is obtained. The end of the regulator (16), opposite the rear cylindrical portion (40) comprises a front cylindrical portion (46) of a smaller diameter than other cylindrical portions of the same regulator (16).

A through-hole formed by a first hole (48) by the rear cylindrical portion (40) and a reception seat (50), connected to the first hole (48) is also obtained axially in the regulator (16).

A part of the piston (14) which, illustrated in figure 8, comprises a first cylindrical body (52) and a second cylindrical body (54) coaxial to the first cylindrical body) and with a larger diameter than the first cylindrical body (52) is housed in the reception seat. An external grove (56) is obtained in the cylindrical body (54).

A stem (18) including an extended cylindrical body (58), one part coupled stably in a hole obtained in the piston (14) and the other including a threaded cylindrical end (60), is fixed to the piston (14).

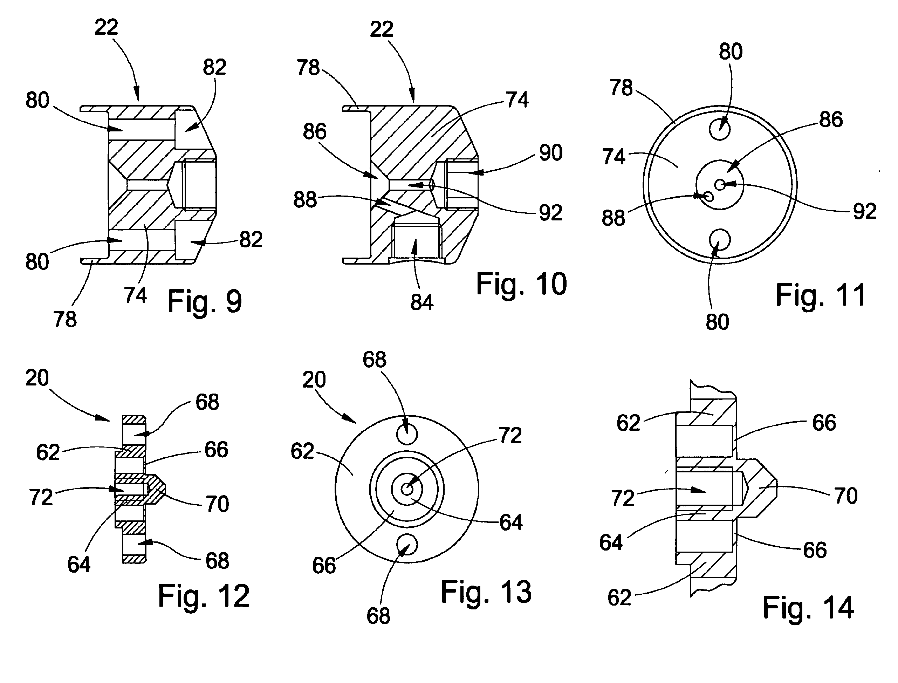

The diaphragm (20), visible in figures 12, 13 and 14, is fixed at the threaded cylindrical end (60). The diaphragm (20) comprises a disc-shaped body formed by an external annular body (62) in which there are two through-holes (68) and a more internal cylindrical body (64), connected together by a thin plate (66). The same thin plate (66) is flexible in order to allow movement in relation to the more internal cylindrical body (64) in relation to the external annular body (62).

The more internal cylindrical body (64) comprises a truncated cone-shaped end (70); at the opposite side of the cylindrical body itself (64), there is an appropriately threaded blind hole (72) that enables coupling through screwing with the threaded cylindrical end (60) of the stem (18).

The diaphragm (20), in particular its truncated cone-shaped end (70), allows or prevents the passage of fluid in the duct obtained in the head (22).

The diaphragm (20) is made in a single body using polytetrafluoroethylene (PTFE) and the thin plate (66) has a thickness that allows the relative movement of the different parts of the same diaphragm (20) and at the same time ensures millions of life cycles before needing to be replaced.

The head (22), visible in figures 9, 10 and 11, comprises a cylindrical body (74) with a truncated cone-shaped end. At the opposite end, the head (22) comprises a circular crown (78).

In the head (22), there are two through-holes (80) that are connected with the respective seats (82) with a larger diameter, obtained in the truncated cone-shaped end.

In the head (22), there is also a passing duct, formed by a first cylindrical opening (84) threaded with a radial axis compared to the cylindrical body (74), connected through a tilted duct (88) to a truncated cone-shaped opening (86) obtained centrally on one face of the cylindrical body (74).

In turn, the truncated cone-shaped opening is connected, through an axial duct (92), to a second threaded cylindrical opening (90), obtained in the truncated cone-shaped end.

Thanks to this configuration, a continuous passing duct is created that communicates the first threaded cylindrical opening (84) and the second thread cylindrical opening; these openings (84, 90) may be suitably connected to ducts equipped with joints threaded in a similar way.

As shown in figures 1, 2 and 3, in the intermediate hole (28) in the valve body (12), there is a first internal clamping ring (106) (also known as a Seeger ring), a washer (108) and a slide gasket (110), all three with a central axial hole with a diameter equal to that of the extended cylindrical body (58) of the stem (18) that crosses them.

To reduce friction and wear to the gaskets, the piston (14) is made of aluminium, while the stem (18) is made of steel, specifically 100Cr6 steel. Thanks to the use of these materials, it is possible to improve resistance to wear and fatigue. The stem (18) is also coated with titanium nitride (TiN) and lapped, thereby minimizing surface roughness that causes friction.

The regulator (16) is coupled to the valve body (12) thanks to the screwing of the threaded portion (38) of the regulator (16) itself in the threading (30) obtained in the end of the rear chamber (26). In the groove (44) of the end cylindrical portion (42) of the regulator (16), there is a first O-ring (98) designed to produce greater friction between the valve body (12) and the regulator (16) in order to make regulation more sensitive and reduce the possibility of unscrewing in the event of vibrations.

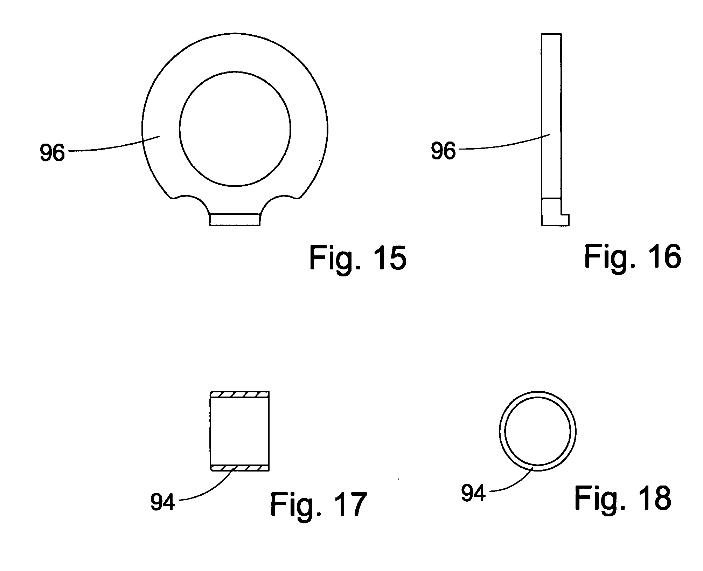

The reception seat (50) in the regulator (16) houses a spring (100) which, in turn, houses the first cylindrical body (52) of the piston (14). One end of the spring (100) is in beat on the bottom of the reception seat (50) while the opposite end is in beat with an anti-torsion spring (96), also illustrated in figures 15 and 16, in turn in beat on the face of the first cylindrical body (52). The piston (14) can transfer inside the rear chamber (26) of the valve body (12). In particular, the lateral surface of the second cylindrical body (54) is close to the lateral surface of the rear chamber (26).

Particular care is taken with the finish of the rear chamber (26), so as to minimize the roughness and ensure maximum smoothness of the piston (14), also thanks to the finishing of the surface itself.

The transfer of the piston (14) is limited, on one side when the second cylindrical body (54) goes in beat on the bottom of the rear chamber (26) and on the other when the second cylindrical body (54) goes in beat with the front cylindrical portion (46) of the regulator (16).

In the rear chamber (26), there is also a second internal clamping ring (104) designed to block the transfer of the piston (14) in the event that the regulator (16) is positioned too far outside the valve body (12).

Between the bottom of the rear chamber (26) and the second cylindrical body (54), there is an expansion chamber (27), whose tightness is ensured by a second O-ring (102) located in the groove (56) of the second cylindrical body (54). In addition, the expansion chamber (27) is connected, through the duct (34), to the opening (32), threaded at the perimeter and designed to be coupled to a similarly threaded joint of a duct.

The stem (18) is coupled with the diaphragm (20); more precisely the threaded cylindrical end (60) of the stem (18) is screwed into the similarly threaded blind hole (72) of the cylindrical body (64) of the diaphragm (20).

A reinforcing ring (94) made of brass, also illustrated in figures 17 and 18, is located outside the cylindrical body (64) of the diaphragm (20), so as to improve the sealing of the threading obtained in the blind hole (72) in the cylindrical body (64) itself.

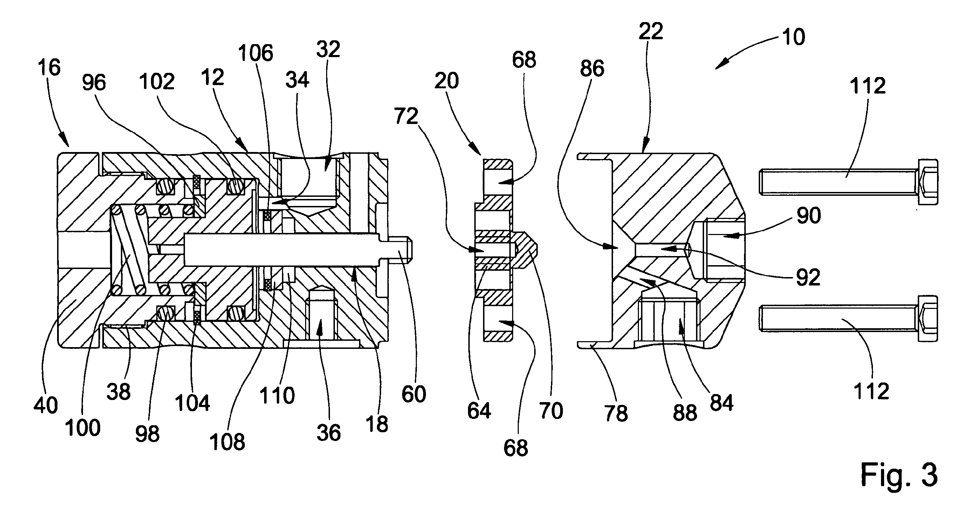

As shown in figure 3, the diaphragm (20) and the head (22) are fixed to the valve body (12) by two bolts (112) passing through the holes (80) in the head (22) and the holes (68) in the diaphragm (20) and screwed in the threaded holes (25) in the valve body (12), visible in figure 5. The heads of the two bolts (112) are received in the respective seats (82) in the truncated cone-shaped end (76) of the head (22).

The diaphragm (20) is housed inside the circular crown (78) of the head (22), so that the truncated cone-shaped end (70) of the cylindrical body (64) is housed in the truncated cone-shaped opening (86) obtained centrally on the face of the cylindrical body (64) in contact with the diaphragm itself (20).

The diaphragm valve (10) is normally closed in the rest position, as illustrated in figure 1. The spring (100) is, in fact, under pressure, through the anti-torsion washer (96), on the piston (14) and, consequently, the expansion chamber (27) has essentially zero volume. The diaphragm (20) is blocked in the closed position. In particular, the truncated cone-shaped end (70) of the diaphragm (20) whose conformation is the same as the truncated cone-shaped opening (86) of the head (22), blocks the axial duct (92), so that this does not communicate with the tilted duct (88).

In this way, the fluid cannot pass through the passage created in the head (22) and cannot therefore enter or leave the first threaded cylindrical opening (84) or the second threaded cylindrical opening (90).

The special truncated cone-shaped conformation of the truncated cone-shaped end (70) of the diaphragm (20) and the truncated cone-shaped opening (86) of the head (22) makes it possible to minimize the amount of fluid inside the head (22) as can be seen in figure 1. In addition, the head (22) is made of stainless steel so as not to be substantially corroded by the fluid passing through the passage created in it.

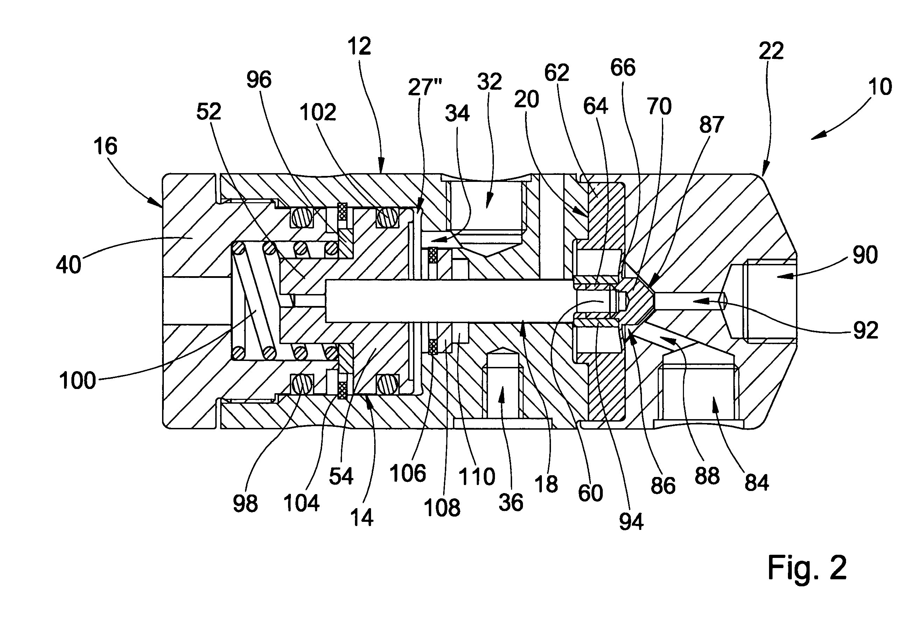

If you wish to open the passage created in the head (22), the valve is made to open, obtaining the configuration shown in figure 2. Pressurized air is introduced through the radial opening (32) and the duct (34) in the expansion chamber (27) which expands, so the piston (14) transfers, compressing the spring (100) and moving the stem (18). Consequently, the stem, transferring, deforms the diaphragm 20, in particular the thin plate (66), moving the cylindrical body (64) in relation to the external annular body (62) of the diaphragm (20). The truncated-cone shaped end (70) of the cylindrical body (64) is therefore not in beat on the walls of the truncated cone-shaped opening (86), creating a passing opening (87) between the walls themselves that allows fluid to pass between the oblique duct (88) and the axial duct (92). Depending on the time of opening of the diaphragm valve (10), the amount of fluid that travels through the passage in the head (22) varies. In addition, the amount of fluid can be changed using the regulator (16). In fact, by rotating the rear cylindrical portion (40), the regulator (16) is screwed or unscrewed in relation to the valve body (12), thus varying the length of the expansion chamber and, consequently, also varying the maximum distance that can be reached between the truncated cone-shaped end (70) of the cylinder body (64) and the walls of the truncated cone-shaped opening, increasing or decreasing the passing opening (87) illustrated in figure 2.

According to a variant of the invention, a diaphragm valve comprises a head made of polytetrafluoroethylene (PTFE) so it can be used for dosing substances that could potentially corrode the stainless steel.

There are also other possible variations and methods of realization, such as the shape and position of the ducts passing through the head, to be considered comprised in the scope of protection defined by the appended claims.

## Claims

1. Diaphragm valve (10) for dosing a fluid, comprising:
- a valve body(12) in which a rear chamber (26) and a front hole (24), connected to each other, are obtained;
- a regulator body (16) inserted in the rear chamber (26) of the valve body(12), so that said regulator body (16) stops said rear chamber (26) at the back;
- a piston (14) moving inside the rear chamber (26) and being pushed by elastic means (100) interposed between the regulator body (16) and said piston (14);
- a stem (18) having an end fixed to the piston (14) and going through the front hole (24);
- a diaphragm (20), at least partially fixed to the valve body(12) and comprising a moving body (64) fixed to the free end (60) of the stem(18), so that said moving body (64) can be moved thanks to the stem movement (18);
- a head (22) fixed to the valve body(12) and in which a passing duct (84, 86, 88, 90, 92) is obtained, said passing duct suitable for being crossed by the fluid to be dosed;
said passing duct comprising an opening chamber (86) in which the moving body (64) can be moved, so that said moving body (64) can be placed in a first closing position wherein the moving body (64) closes the passing duct, and in a second opening position wherein the moving body (64) opens the passing duct;
the moving body (64) comprising a truncated cone-shaped end (70); the opening chamber (86) having a truncated cone shape which corresponds to the shape of the truncated cone-shaped end (70), so that, when the moving body (64) is in the first closing position, the opening chamber (86) is at least partially occupied by the truncated cone-shaped end (70);
the diaphragm (20) comprising an external anular body (62) fixed to the valve body (12) and to the head (22), and connected through a flexible plate (66) to the moving body (64); a threaded blind hole (72) being obtained in said moving body (64), the free end (60) of the stem (18) being threaded with a thread corresponding to the thread of the blind hole (72) of the moving body (64), so that said free end (60) is screwed into said blind hole (72); **characterized in that** a ring (94) is placed around the moving body (64) and is suitable for strengthening the threaded coupling of the stem (18) with the moving body (64) of the diaphragm (20).

2. Diaphragm valve (10) according to claim 1, wherein the ring (94) is made of brass.

3. Diaphragm valve (10) according to one of the preceding claims, wherein the stem (18) is made of steel and is coated with titanium nitride (TiN) and lapped, so that the surface roughness is minimized.

4. Diaphragm valve (10) according to one of the preceding claims, wherein the piston is made of aluminium and/or steel.

5. Diaphragm valve (10) according to one of the preceding claims, wherein the regulator body (16) is screwable in the rear chamber (26) of the valve body (12), so that said regulator body (16) can vary its position as to the rear chamber (26), in order to adjust the length of the stroke of the piston (14) and the distance between the truncated cone-shaped end (70) and the opening chamber (86).

6. Diaphragm valve (10) according to one of the preceding claims, wherein the head (22) has a cylindrical shape and has a side which is adjoining to the diaphragm (10), and wherein the passing duct obtained in the head (22) comprises a radially-extending first exit duct (84) connected with one end to the outside and with the opposite end, through an oblique duct (88), to the opening chamber (86), and a second exit duct (90) connected with one end to the outside and with the opposite end, through an axial duct (92), to the opening chamber (86); said opening chamber (86) being obtained in the side which is in front of the diaphragm (10).

7. Diaphragm valve (10) according to one of the preceding claims, wherein clamping ring (104) is placed in the rear chamber (26), said clamping ring (104) being adapted to stop the stroke of the piston (14) in case the regulator body (16) is unthreaded from the rear chamber (26).

8. Diaphragm valve (10) according to one of the preceding claims, wherein the regulator body (16) comprises a cavity (50) in which a spring (100) is received, and wherein the piston (14) comprises a first cylindrical body (52) and a second cylindrical body (54) having a diameter bigger than the diameter of the first cylindrical body (52); the first cylindrical body (52) being placed inside the spring (100) and being coaxial as to said spring (100), said spring (100) bearing with one end against the bottom of the cavity (50) and with the other end against the face of the second cylindrical body (54).

## Patentansprüche

1. Membranventil (10) für das Dosieren einer Flüssigkeit, bestehend aus:
- einem Ventilkörper (12), in dem eine rückwärtige Kammer (26) und eine vordere Öffnung (24), die miteinander verbunden sind, gewonnen werden;
- einem in die rückwärtige Kammer (26) des Ventilkörpers (12) eingesetzter Reglerkörper (16), der besagte rückwärtige Kammer (26) verschließt;
- einem sich im Inneren der rückwärtigen Kammer verlagernden Kolben (14), der durch eine Feder (100), die sich zwischen dem Reglerkörper (16) und dem besagten Kolben (14) befindet, unter Druck gesetzt wird;
- einem Schaft (18), dessen Ende am Kolben (14) befestigt ist und die vordere Öffnung (24) durchquert;
- einer Membran (20), die zumindest teilweise am Ventilkörper (12) befestigt ist und die einen beweglichen, am freien Ende (60) des Schafts (18) befestigten Körper (64) beinhaltet, sodass besagter Körper (64) aufgrund der Bewegung des Schaftes (18) bewegt werden kann;
- einem am Ventilkörper (12) befestigten Ventilkopf (22), in dem ein Durchgangskanal (84, 86, 88, 90, 92) für den Durchfluss der zu dosierenden Flüssigkeit geschaffen wird;
der besagte Durchgangskanal aufweist eine Öffnung (86), in der sich der bewegliche Körper (64) sich derart bewegen kann, dass dieser bewegliche Körper (64) sich in einer ersten Verschlussstellung, in der er den Durchgang verschließt und in einer zweiten Öffnungsstellung, in der er den Durchgang offen hält, anordnet;
der bewegliche Körper (64) ist mit einer kegelstumpfartigen Endung (70) versetien; da die Öffnung (86) eine gleichartige kegelstumpfartige Form aufweist wie die der kegelstumpfartigen Endung (70), wird die Öffnung (86) wenigstens teilweise von der kegelstumpfartigen Endung (70) eingenommen, wenn der bewegliche Körper (64) sich in der ersten Verschlussstellung befindet;
die Membran (20) besteht aus einem ringförmigen äußeren Körper (62), der am Ventilkörper (12) und dem Ventilkopf (22) befestigt und mittels eines flexiblen Blättchens (66) mit dem beweglichen Körper (64) verbunden ist; in besagtem beweglichen Körper (64) ist eine Sack-Gewindebohrung (72) vorgesehen, in die das freie Ende (60) des Schaftes (18) mit gleichem Gewinde wie dem der Sackbohrung (72) des beweglichen Körpers (64) eingeschraubt wird;
**dadurch gekennzeichnet, dass** um den beweglichen Körper (64) ein Ring (94) angeordnet ist, der die Verbindung mittels Gewinde des Schafts (18) mit dem beweglichen Körper (64) der Membran (20) verstärken soll.

2. Membranventil (10) gemäß dem Anspruch 1, bei dem der Ring (94) aus Messing besteht.

3. Membranventil (10) gemäß einem der vorherigen Ansprüche, bei dem der Schaft (18) aus Stahl besteht und mit Titannitrid (TiN) überzogen und geläppt ist, um die Rauheit der Oberfläche zu verringern.

4. Membranventil (10) gemäß einem der vorherigen Ansprüche, bei dem der Kolben aus Aluminium bzw. Stahl gefertigt ist.

5. Membranventil (10) gemäß einem der vorherigen Ansprüche, bei dem der Reglerkörper (16) in die rückwärtige Ventilkammer (26) des Ventilkörpers (12) eingeschraubt werden kann, sodass besagter Regler (16) seine Stellung gegenüber der Ventilkammer (26) verändern und so die Länge des Hubs des Kolbens (14) und den Abstand zwischen dem kegelstumpfförmigen Ende (70) und der Öffnung (86) regeln kann

6. Membranventil (10) gemäß einem der vorherigen Ansprüche, bei dem der Ventilkopf (22) eine zylindrische Form mit einer an der Membran (10) anliegenden Seite aufweist und bei der der im Ventilkopf (22) geschaffene Durchgangskanal einen ersten Auslass (84) mit radialer Ausbreitung (88) aufweist, der einerseits mit dem Äußeren (90) und andererseits, mittels eines mittigen Gangs (92) mit der Öffnung (86) verbunden ist; besagte Öffnung (86) ist in die an der Membran (10) anliegenden Seite eingelassen.

7. Membranventil (10) gemäß einem der vorherigen Ansprüche, bei dem in der Ventilkammer (26) ein Feststellring (104) angeordnet ist, der den Hub des Kolbens (14) für den Fall blockiert, dass der Reglerkörper (16) von der Ventilkammer (26) abgezogen ist.

8. Membranventil (10) gemäß einem der vorherigen Ansprüche, bei dem der Reglerkörper (16) eine Vertiefung (50) aufweist, in der eine Feder (100) aufgenommen ist, und bei der der Kolben (14) aus einem ersten zylindrischen Körper (52) und einem zweiten zylindrischen Körper (54) von größerem Durchmesser als dem des ersten (52) besteht; der erste zylindrische Körper (52) ist im Inneren der Feder (100) und koaxial zur Feder (100) angeordnet, wobei besagte Feder (100) auf der einen Seite auf dem Boden der Vertiefung (50) und auf der anderen auf der Seite des zweiten zylindrischen Körpers (54) aufliegt.

## Revendications

1. Vanne à membrane (10) pour doser un fluide, comprenant :
- un corps de vanne (12) où sont formés une chambre arrière (26) et un trou avant (24) raccordés entre eux ;
- un corps régulateur (16) inséré dans la chambre arrière (26) du corps de vanne (12), de façon à obturer ladite chambre arrière (26) ;
- un piston (14) coulissant à l'intérieur de la chambre arrière et mis sous pression par un moyen élastique (100) interposé entre le corps régulateur (16) et ledit piston (14) ;
- une tige (18) ayant une extrémité fixée au piston (14) et passant à travers le trou avant (24) ;
- une membrane (20), au moins partiellement fixée au corps de vanne (12) et comprenant un corps mobile (64) fixé à l'extrémité libre (60) de la tige (18) de sorte que ledit corps mobile (64) puisse être déplacé grâce à déplacement de la tige (18) ;
- une tête (22) fixée au corps de vanne (12) et dans laquelle est formé un canal de passage (84, 86, 88, 90, 92) apte à être traversé par le fluide à doser ;
ledit canal de passage comprenant une ouverture (86) dans laquelle peut se déplacer le corps mobile (64) de sorte que ledit corps mobile (64) puisse être disposé dans une première position de fermeture dans laquelle il ferme le canal de passage et dans une seconde position d'ouverture dans laquelle il maintient ouvert le canal de passage ;
le corps mobile (64) comprenant une extrémité tronconique (70) ; l'ouverture (86) ayant une forme tronconique homologue à l'extrémité tronconique (70), de sorte que lorsque le corps mobile (64) est dans la première position de fermeture, l'ouverture (86) est au moins partiellement occupée par l'extrémité tronconique (70) ;
la membrane (20) comprenant un corps annulaire extérieur (62) fixé au corps de vanne (12) et à la tête (22), et relié au moyen d'une lame (66) souple au corps mobile (64) ; étant formée dans ledit corps mobile (64) un trou borgne (72) fileté, l'extrémité libre (60) de la tige (18) étant filetée avec un filetage homologue à celui du trou borgne (72) du corps mobile (64) de sorte que ladite extrémité libre (60) soit vissée dans le trou borgne (72) ;
**caractérisée en ce que** une bague (94) est disposée autour du corps mobile (64) adaptée pour renforcer le couplage pour le filetage de la tige (18) avec le corps mobile (64) de la membrane (20).

2. Vanne à membrane (10) selon la revendication 1, où la bague (94) est en laiton.

3. Vanne à membrane (10) selon l'une des revendications précédentes, où la tige (18) est en acier et est revêtue de nitrure de titane (TiN) et rodée, de façon à minimiser la rugosité de surface.

4. Vanne à membrane (10) selon l'une des revendications précédentes, où le piston est réalisé en aluminium et / ou acier.

5. Vanne à membrane (10) selon l'une des revendications précédentes, où le corps régulateur (16) peut être vissé dans la chambre arrière (26) du corps de vanne (12), de sorte que ledit corps régulateur (16) fait varier son position par rapport à la chambre arrière (26), de manière à régler la longueur de course du piston (14) et la distance entre les extrémités tronconiques (70) et l'ouverture (86).

6. Vanne à membrane (10) selon l'une des revendications précédentes, où la tête (22) a une forme cylindrique avec une face adjacente à la membrane (10), et où le canal de passage formé dans la tête de (22) comprend un premier conduit de sortie (84) de développement radial communiquant d'une part avec l'extérieur et, d'autre part, à travers un conduit oblique (88), avec l'ouverture (86), et un second conduit de sortie (90) communiquant d'une part avec l'extérieur et d'autre part, par un conduit axial (92), avec l'ouverture (86) ; ladite ouverture (86) étant formée dans la face adjacente à la membrane (10).

7. Vanne à membrane (10) selon l'une des revendications précédentes, où la chambre arrière (26) est disposée une bague de butée (104) apte à bloquer la course du piston (14) dans le cas où le corps régulateur (16) est tiré au-dessus de la chambre arrière (26).

8. Vanne à membrane (10) selon l'une des revendications précédentes, où le corps régulateur (16) comprend une cavité (50) dans laquelle est logé un ressort (100), et dans laquelle le piston (14) comprend un premier corps cylindrique (52) et un second corps cylindrique (54) de diamètre supérieur à celui du premier corps cylindrique (52) ; le premier corps cylindrique (52) étant disposé à l'intérieur du ressort (100) et coaxial avec le ressort lui-même (100), ledit ressort (100) étant d'un côté en butée sur le fond de la cavité (50) et sur l'autre sur la ace du second corps cylindrique (54).
